# EUROPEAN PATENT APPLICATION

(11) **EP 2 418 518 A2**
(43) Date of publication of application: **15.02.2012**
(21) Application number: 11176973.3
(22) Date of filing: 09.08.2011
(51) Int. Cl.: G02B 1/04, B29D 11/00

(54) **Time-intensity modulated UV cure for optical lens forming material**

(30) Priority: 11.08.2010 US 372601 P
(71) Applicant: Novartis AG, 4056 Basel (CH)
(72) Inventor: Seiferling, Bernhard, 63773 Goldbach (DE); Vogt, Jürgen, 4112 Flüh (CH); Irrgang Vogt, Christine, 4112 Flüh (CH); Medina, Arturo N., Suwanee, GA 30024 (US)
(74) Representative: Bohest AG

(57) **Abstract**

The present invention relates to a process for effectively curing a lens forming material to form a lens, preferably a contact lens. In particular the present invention relates to a modulated UV/VIS irradiation curing process, preferably using UV light, wherein the lens forming material is first cured with a very high intensity for a first short time period and then with a significantly lower intensity for a significantly longer time period.

## Description

The present invention relates to a process for effectively curing a lens forming material to form a lens, preferably a contact lens. In particular the present invention relates to a modulated UV/VIS irradiation curing process, preferably using UV light, wherein the lens forming material is first cured with a very high intensity for a short time period and then with a significantly lower intensity for a significantly longer time period and, optionally, with further intermediate intensities for further additional time periods.

### BACKGROUND OF THE INVENTION

Ophthalmic lenses, in particular contact lenses, which it is intended to produce economically in large numbers, are preferably produced by the so-called mold or full-mold process. In this process, the lenses are produced in their final shape between two mold halves, so that neither subsequent machining of the surfaces of the lenses nor machining of the edge is necessary. Mold processes are described, for example in WO-A-87/04390, EP-A-0367513 or in US-A-5894002.

In the known molding processes, the geometry of the contact lens to be produced is defined by the mold cavity. The edge of the contact lens is likewise formed by the mold, which usually consists of two mold halves. The geometry of the edge is defined by the contour of the two mold halves in the region in which they make contact with each other and/or by the spatial limitation of the UV/VIS light used for cross-linking the lens forming material.

In order to produce a contact lens, usually a specific amount of a flowable lens forming material is introduced into the female mold half in a first step. The mold is then closed by putting the male mold half into place. The subsequent curing (i.e. polymerization and/or cross-linking) of the lens forming material is carried out by means of irradiation with UV/VIS light and/or by heating. In the process, either both the lens forming material in the mold cavity and the excess material in the overflow space are hardened or only the lens forming material in the mold cavity is hardened, whereas the excess material in the overflow space remains as partly cured or uncured "flash". In order to obtain fault-free separation of the contact lens from the excess material, good sealing or expulsion of the excess material must be achieved in the zone in which the two mold halves make contact with each other or in the zone which defines the spatial limitation of the UV/VIS light used for cross-linking the lens forming material.

After the lens if formed, the mold is disassembled and the lens removed. Additional processing steps, such as inspection, extraction, hydration, surface treatment and sterilization may finally be performed on the lens before packaging.

UV/VIS radiation (preferably UV light) is widely used to polymerize and/or crosslink reactive monomers or prepolymers to manufacture polymeric articles, in particular contact lenses. Usually the radiation wavelength and intensity is adapted to the absorbance of the photo initiator and to its concentration. In advanced industrial scale manufacture of contact lenses, the illumination with UV light and the photochemical reactivity of the lens forming material are optimized for efficient processing within a very short cycle time (preferably 5 to 60 seconds, compared to 5 to 60 minutes in conventional contact lens manufacture).

Generally, there are several requirements for an effective curing process (i.e. a polymerization and/or cross-linking process) for the manufacture of a contact lens:

One requirement is a sufficient degree of polymerization and/or cross-linking in the final lens, which may be determined by a sufficiently high modulus of elasticity which, depending on the method, may for example be determined as shear modulus (G').

Another requirement is the peak intensity of the cure illumination, as well as the overall energy consumption of the curing process (i.e. the polymerization and/or cross-linking process).

A moderate peak intensity allows to use commercially available illumination devices, with usually relatively low costs for maintenance, whereas a high peak intensity may require special equipment, with usually higher costs for maintenance. The overall energy consumption of the curing process (i.e. the polymerization and/or cross-linking process) is of particular economic relevance, as it is usually intended to produce contact lenses in large numbers.

Yet another requirement is the illumination time for a complete polymerization and or cross-linking of the lens forming material in the final lens. This may be determined by exceeding a certain threshold of the modulus of elasticity, herein expressed as shear modulus (G') or by staying below a certain threshold (preferably < 1 % by weight, more preferably < 0.1 % by weight) of so-called extractables, i.e. unpolymerized or uncrosslinked monomers or macromers or polymers with a low molecular weight and/or not linked to the polymer network. The illumination time is one of the key parameters determining the cycle time of the manufacturing process for contact lenses on an industrial scale.

There are several approaches known in the art to produce ophthalmic lenses, in particular contact lenses, using UV/VIS radiation for polymerizing and/or cross-linking a lens forming material.

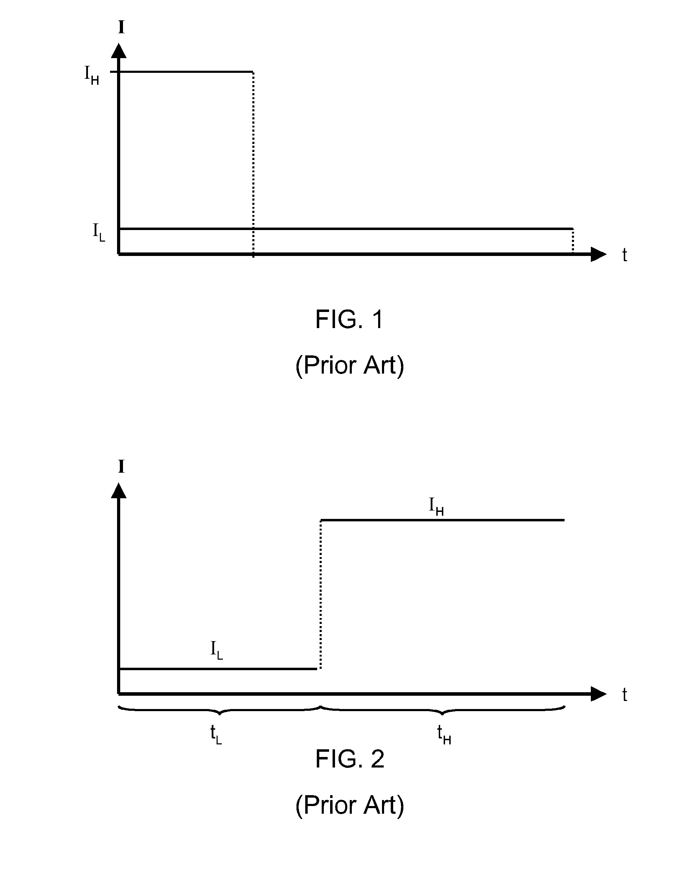

WO-A-01/46717 discloses a method for producing an ophthalmic lens comprising a) a low intensity (I_{L}) UV light exposure to convert at least about 50 percent or more of a resin's reactive groups; and b) exposing, subsequently, the resin to high intensity (I_{H}) UV light to substantially complete curing of the resin. A schematic representation of said method is shown in Figure 2 below. A resin is at least one mono functional monomer, one or more polyfunctional monomers and one or more initiators. A low intensity UV light is from 1 to 5 mW/cm² at wavelength from 360 to 400 nm with the intention to maintaining the rate of polymerization as low as possible. Step a) may comprise incorporation of periods of non-exposure into the low intensity exposure cycle. Total exposure time is from 60 to 120 seconds, with periods of non-exposure of 5 to 60 seconds. A high intensity UV light is from 500 to 1500 mW/cm². Exposure time is 5 to 15 seconds in a single continuous exposure or alternating periods of exposure and non-exposure.

EP-B-0686491 discloses a method for consolidated contact lens molding wherein the mold assembly is exposed to multiple cycles of increasing and decreasing UV radiation intensity. In each cycle, the intensity of the UV radiation ranges from zero up to 3 to 3.5 mW/cm² and then back to zero. Total cycle time of the mold assembly in the curing area is from 300 to 440 seconds. It is stated that through careful control of the parameters of this operation a superior, fully polymerized contact lens can be produced which exhibits reproducible successful production within a relatively minor period of time.

DE19641655 discloses a method for light curable monomer compositions comprising a two-step exposure comprising a partial exposure period and a full exposure period, wherein the partial exposure is a masked exposure.

Further it is known, that decreasing irradiation time by increasing the intensity of the UV/VIS radiation has its limits in the characteristics of the photochemical reactions usually involved in the manufacture of contact lenses. Above a certain intensity, radicals generated within a time period will react with each other by recombination. The number of radicals effectively contributing to the polymerization and/or cross-linking reaction will decrease accordingly.

Furthermore, with a high rate of radical generation, the polymerizing chain length and/or cross-linking density is decreasing, which as described above is disadvantageous for the mechanical properties of the polymeric article formed, i.e. indicated by a low modulus of elasticity, herein expressed as shear modulus (G') of the polymeric article.

Accordingly, there is a need for optimized curing methods (i.e. polymerization and/or cross-linking methods) for the manufacture of contact lenses.

It is an object of the present invention to provide an improved method for UV/VIS curing in the industrial scale manufacture of contact lenses.

Further it is know, that in the industrial scale manufacture of contact lenses, very long illumination time increases the overall processing time (cycle time) and thereby significantly increases the costs per unit.

Therefore it is a further objective of the present invention to provide an improved process for the manufacture of contact lenses with reduced cycle time, while at the same time reaching completeness of the polymerization and/or cross-linking reaction and maintaining the mechanical properties, in particular the shear modulus G', of the formed contact lenses at an acceptable level.

### SUMMARY OF THE INVENTION

Surprisingly, it has now been found that the necessary irradiation time for complete cure of a lens forming material, i.e. to provide for sufficient mechanical properties, can be significantly shortened by applying a modulated UV/VIS irradiation scheme. This scheme has to be adapted and optimized for the individual formulation of the lens forming material, but in general follows the following intensity and time sequence:

Initially, for a short time period a high intensity of UV/VIS light is applied, to generate just enough primary radicals to react with all components inhibiting the polymerization and/or cross-linking reactions in the formulation. Said components comprise the intentionally added stabilizers, dissolved oxygen as well as other radical scavenging impurities. After said relatively short time period, a comparatively low intensity of UV/VIS light is used, over a relatively long time period, to generate just enough radicals to effectively start and maintain a defined number of polymerizing chains and/or cross-linking reactions. As the concentration of the polymerizable and/or cross-linkable reactive entities and the concentration of the photo initiator decreases over time, the UV/VIS intensity preferably is increased accordingly, continuously or in one or several steps, to keep the overall polymerization and/or cross-linking reactions running at an optimum rate over the relatively long time period. The again increased UV/VIS intensity (of each step) is higher than each one of the preceding intensities, but not higher than the first intensity. Preferably the increased UV/VIS intensity (of each subsequent step) is still comparatively low, compared to the high intensity of UV/VIS light applied in the initial short time period.

Accordingly, the present invention is directed to a process for curing a lens forming material, comprising the steps of providing a lens forming material to form a lens, preferably a contact lens, in a mold; irradiating the lens forming material with UV/VIS radiation, characterized in that the UV/VIS radiation is modulated UV/VIS radiation provided according to the following scheme: a first intensity for a first time period; and thereafter a second intensity for a second time period; wherein the first intensity is significantly higher than the second intensity ; wherein the first time period is significantly shorter than the second time period ; and wherein, within a total curing time of the first and second time period, the lens-forming material is cured to a complete curing level.

The term "lens" as used herein generally refers to ophthalmic lenses, preferably contact lenses and in particular to hydrogel and more particular to silicone hydrogel contact lenses. The term "lens forming material" as used herein generally refers to mixtures of monomers and macromonomers (also called macromers) and optionally solvent(s), or macromonomers and optionally solvent, containing one or more photoinitiators and optionally other additives.

The term "UV/VIS radiation" as used herein generally refers to electromagnetic radiation in the wavelength range of 220 to 800 nm. The UV/VIS radiation preferably is appropriately filtered to the absoprtion of the lens forming materials and more specifically to the absorption of the photoinitiator. UV radiation generally is in the wavelength range of from 200 to 400 nm, preferably of from 280 to 400 nm, more preferably in the wavelength range of from 315 to 400 nm (also called UV-A).

The term "modulated" as used herein comprises variation of the intensity of a UV/VIS radiation received by a target area (i.e. a mold comprising a lens forming material) over time, wherein either the intensity may be modulated at the UV/VIS source itself or wherein a constant intensity from the UV/VIS source may be modulated in between the UV/VIS source and the target area. A person skilled in the art will know how to provide UV/VIS radiation of different wavelength distribution and intensities in a target area.

The term "pulsed" is to be understood as an 0/I scheme, i.e. a sequence of no-irradiation/ irradiation, wherein each pulse within the sequence preferably is at the same intensity as the previous pulse.

The term "curing" as used herein comprises polymerization and/or cross-linking reactions. The term "complete curing level" as used herein generally refers to a state of cure when practically all polymerizable groups of the lens forming material have reacted and thus the modulus of elasticity, herein expressed as shear modulus (G'), when measured in a continuous experiment, has asymptomatically reached its maximum value, resulting in a crosslinked material with no or only minimal amounts of extractables. The term "extractables" generally refers to the amount (or mass), which can be dissolved out of a completely cured lens forming material with an appropriate solvent or an appropriate mixture of solvents.

### BRIEF DESCRIPTION OF THE DRAWINGS

Figure 1 is a schematic representation of two curing methods according to the prior art.
Figure 2 is a schematic representation of a curing method as disclosed in WO-A-01/46717.
Figure 3 is a schematic representation of three different curing methods with continuous irradiation with UV/VIS light.
Figure 4 is a schematic representation of the resulting properties of a lens material, when cured according to the methods of Figure 3.
Figure 5 is a schematic representation of two different curing methods, the one being a method of Figure 3 with continuous irradiation with UV/VIS light and the other being a method of a preferred embodiment of the present invention.
Figure 6 is a schematic representation of the resulting properties of a lens material, when cured according to the methods of Figure 5.
Figure 7 is a schematic representation of another embodiment of the process of the present invention.
Figure 8 is a schematic representation of yet another embodiment of the process of the present invention.

### DETAILED DESCRIPTION OF EMBODIMENTS

Figure 1 is a schematic representation of two curing methods according to the prior art. The one method is based on curing with a high intensity (I_{H}) for a shorter time period, whereas the other method is based on a lower intensity (I_{L}) for a longer time period. According to known theories, the two methods would lead to two very different materials with different mechanical properties. As shown in comparative examples later on, the continuous curing with high intensity will lead to a lower modulus of elasticity, herein expressed as shear modulus (G'), after a shorter time period, whereas the continuous curing with low intensity will lead to a higher modulus of elasticity (G') after a longer time period.
Figure 2 is a schematic representation of a curing method as disclosed in WO-A-01/46717. The method comprises in a first step curing a lens forming material with a lower intensity (I_{L}) for a first time period (t_{L}), and in a second step with a higher intensity (I_{H}) for a second time period (t_{H}). s stated in WO-A-01/46717 the exposure to the lower intensity (I_{L}) for the first time period converts at least about 50 percent or more of the reactive groups of the lens forming material. Subsequent exposure to the high intensity (I_{H}) UV light then substantially completes the curing of the lens forming material.

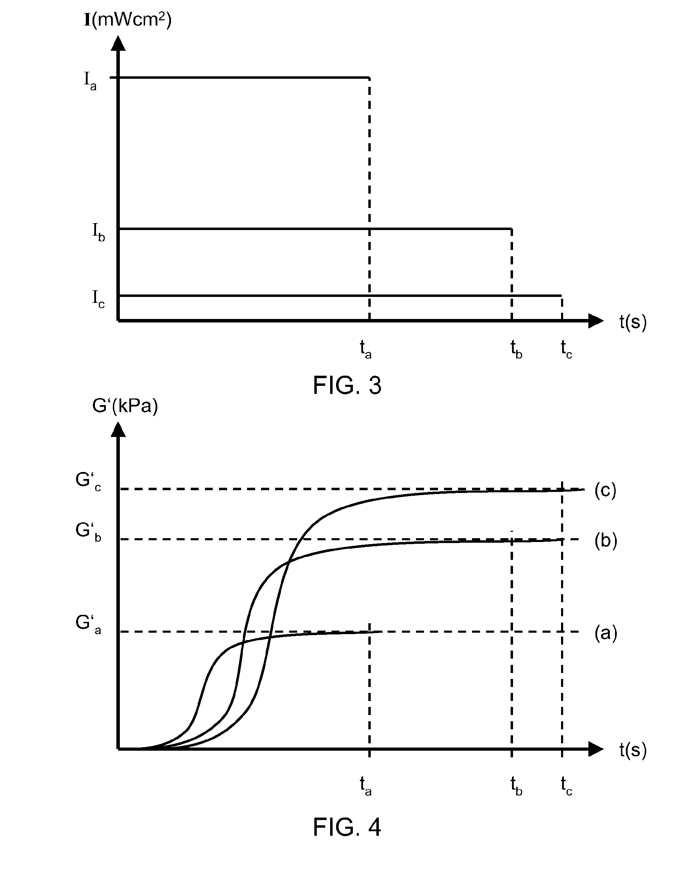

Figure 3 is a schematic representation of three different curing methods (a,b,c), each with continuous irradiation with UV/VIS light of a certain intensity (Iₐ, I_{b}, I_{c}) for a time period (tₐ, t_{b}, t_{c}). According to known theories, the three methods would lead to three very different materials with different mechanical properties. As shown in comparative examples later on, the continuous curing with the highest intensity will lead to a lower modulus of elasticity (G') after a shorter time period, whereas the continuous curing with the lowest intensity will lead to a higher modulus of elasticity (G') after a longer time period. The curing with an intermediate intensity will lead to an intermediate modulus of elasticity (G'). The resulting properties of the lens material are shown in Figure 4. The schematic representation of Figure 4 is showing for each curing method (a,b,c), the modulus of elasticity (G') vs. time (t). The modulus of elasticity in each of the three methods is approaching asymptotically a maximum value ("Plateau") (G'ₐ, G'_{b}, G'_{c}) after a certain time period (tₐ, t_{b}, t_{c}).

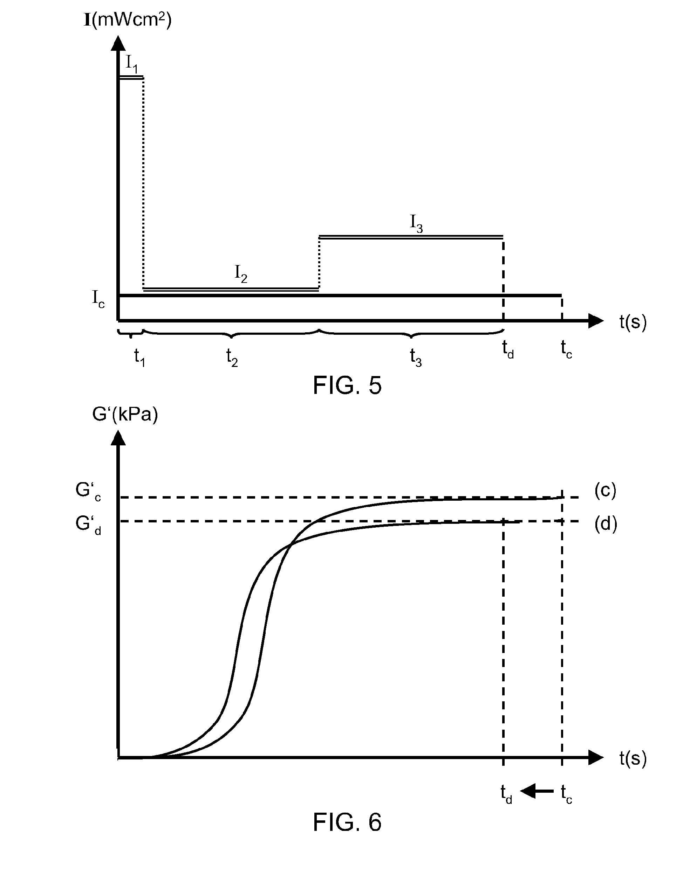

Figure 5 is a schematic representation of two different curing methods (c, d), the one being a method (c) of Figure 3 with continuous irradiation with UV/VIS light of a certain intensity (I_{c}) for a time period (t_{c}), whereas the other is a method (d) of a preferred embodiment of the present invention, with a first very high intensity (I₁) for a first very short time period (t₁), a second significantly lower intensity (I₂) for a second significantly longer time period (t₂), and a third low intensity (I₃) for a third long time period (t₃), wherein, within a total curing time of the first, second and third time period (t₁+t₂+t₃), the lens-forming material is cured to a complete curing level, and wherein the third intensity is higher than the second intensity, but not higher than the first intensity. The resulting properties of the lens material are shown in
Figure 6. The schematic representation of Figure 6 is showing for each curing method (c, d), the modulus of elasticity (G') vs. time (t). The modulus of elasticity is approaching asymptotically a maximum value ("Plateau") (G'_{c}, G'_{d}) after a certain time period (t_{c}, t_{d}).

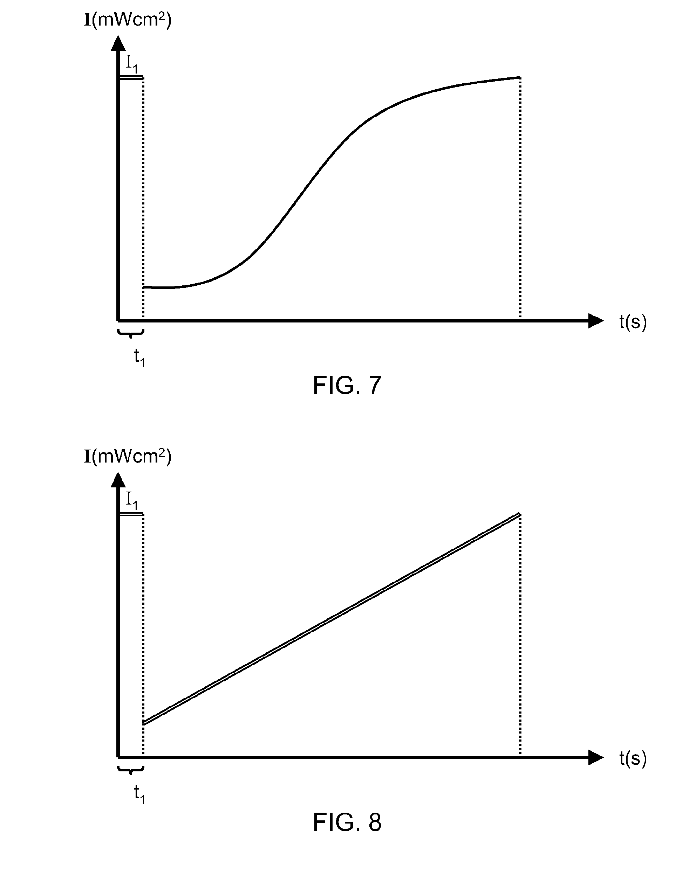

Figure 7 is a schematic representation of another embodiment of the present invention. Figure 7 is showing a curing method with a first high intensity (I₁) for a first very short time period (t₁), and subsequently an increasing intensity for a second time period following a particular function, which increasing intensity starts at a comparatively low intensity and finally reaches the first intensity.
Figure 8 is a schematic representation of another embodiment of the present invention. Figure 8 is showing a curing method with a first high intensity (I₁) for a first very short time period (t₁), and subsequently an increasing intensity for a second time period, which increasing intensity starts at a comparatively low second intensity and increases up to the first intensity, wherein the intensity is increasing according to a linear function.

In one embodiment the present invention is directed to a process for curing a lens forming material, comprising the steps of providing a lens forming material to form a lens, preferably a contact lens, in a mold; irradiating the lens forming material with UV/VIS radiation, characterized in that the UV/VIS radiation is modulated UV/VIS radiation provided according to the following scheme: (1) a first intensity (I₁) for a first time period (t₁); and thereafter (2) a second intensity (I₂) for a second time period (t₂). The first intensity (I₁), which preferably is a high intensity, is significantly higher, preferably from 4-16 times higher, more preferably 6 to 10 times higher, most preferably 8 times higher, than the second intensity (I₂), which preferably is a low intensity; wherein the first time period (t₁), which preferably is a short time period, is significantly shorter than the second time period. Preferably the first time period (t₁) is 1/30 to 1/10, more preferably 1/20 to 1/15, most preferably 1/15, of the second time period (t₂), which preferably is a long time period; and wherein, within a total curing time of the first and second time period (t₁+t₂), the lens-forming material is cured to a complete curing level.

In another embodiment the present invention is directed to a process wherein the scheme further comprises, after the second intensity (I₂) for the second time period (t₂), (3) a third intensity (I₃), which preferably is a low or intermediate intensity, for a third time period (t₃), which preferably is a long time period; wherein, within a total curing time of the first, second and third time period (t₁+t₂+t₃), the lens-forming material is cured to a complete curing level, and wherein the third intensity is higher than the second intensity, but, according to a preferred embodiment of the present invention, is not higher than the first intensity.

In another embodiment the present invention is directed to a process wherein the scheme further comprises, after the third intensity (I₃) for the third time period (t₃), (4) a fourth intensity (I₄) for a fourth time period (t₄); (5) optionally thereafter a fifth intensity (I₅) for a fifth time period (t₅); (6) optionally thereafter a sixth intensity (I₆) for a sixth time period (t₆); wherein, within a total curing time of the first, second, third and fourth time period, and optionally the fifth and/or optionally the sixth time period (t₁+t₂+t₃+t₄+t₅+t₆), the lens-forming material is cured to a complete curing level, wherein each of the third and fourth, and optionally fifth and/or optionally sixth intensity is higher than each one of the preceding intensities. According to a preferred embodiment of the present invention each of said intensities is not higher than the first intensity.

In yet another preferred embodiment the present invention is directed to a process wherein the third intensity (I₃) is from 1 to 2 times higher, than the second intensity (I₂), and wherein the third time period (t₃) is 0.5 to 2 times of the second time period (t₂).

In a preferred embodiment of the present invention the first intensity is from 0.4 to 64 mW/cm², preferably from 2 to 48 mW/cm², more preferably from 4 to 32 mW/cm², most preferably 16 mW/cm²; the second intensity is from 0.1 to 4 mW/cm², preferably from 0.5 to 3 mW/cm², more preferably from 1 to 2 mW/cm², most preferably 2 mW/cm²; the third intensity is from 0.1 to 8 mW/cm², preferably from 0.5 to 6 mW/cm², more preferably from 1 to 4 mW/cm², most preferably 4 mW/cm².

In a preferred embodiment of the present invention the first time period is from 1 to 12 s, preferably 2 to 8 s, more preferably 3 to 6s, most preferably 4 s; the second time period is from 30 to 60s, preferably 60 to 80 s, more preferably 45 to 90 s, most preferably 60 s; the third time period is from 15 to 240 s, preferably 30 to 160 s, more preferably 60 to 120 s, most preferably 120 s.

In another embodiment the present invention is directed to a process wherein after the first intensity (I₁), which preferably is a high intensity, for a first time period (t₁), which preferably is a short time period, the intensity is continuously increased over a second time period, which preferably is a long time period, starting from a second intensity (I₂), which preferably is a low intensity; wherein the first intensity (I₁) is significantly higher, preferably from 4-16 times higher, more preferably 6 to 10 times higher, most preferably 8 times higher, than the second intensity (I₂); wherein the first time period (t₁) is significantly shorter than the second time period. Preferably the first time period (t₁) is 1/30 to 1/10, more preferably 1/20 to 1/15, most preferably 1/15, of the second time period (t₂). And wherein, within a total curing time of the first and second time period (t₁+t₂), the lens-forming material is cured to a complete curing level. In a preferred embodiment thereof the intensity is, after the first intensity (I₁) for the first time period (t₁), continuously increased over the second time period, starting from the second intensity (I₂) at the beginning of the second time period and increasing the intensity up to the first intensity at the end of the second time period. Preferably the intensity is continuously increased according to a linear function.

In an alternative embodiment, pulsed UV/VIS radiation can be applied in the second (or further) time periods described above, with the additional advantage that the dark periods between the short radiation pulses of the pulsed UV/VIS radiation increase the probability to generate long polymeric chains.

In another embodiment the present invention comprises a contact lens manufactured by a process according to any one of the preceding embodiments.

In yet another embodiment the present invention is directed to the use of a process according to any one of the preceding embodiments in the manufacture of contact lenses, in particular hydrogel contact lenses, more particular silicone hydrogel contact lenses.

As shown in the example section below, for a particular lens forming material, the process of the present invention with a modulated intensity over time, provides an acceptable modulus of elasticity, herein expressed as shear modulus (G'), after a significantly shorter time compared to a method using continuous irradiation.

For example, the total curing time for a modulated cure according to the invention is up to about 15% less compared to a continuous cure (i.e. without the initial high intensity) at about the same (or less than 15% smaller) final modulus of elasticity (G'). Further, the curing time up to a modulus of elasticity (G') that is feasible for the industrial scale manufacture of contact lenses, can be shortened by up to about 15%, with a total energy input that is only about 33% higher compared to a continuous cure process.

For a person skilled in the art it is immediately apparent, that said advantages and said technical teaching can be transferred and applied to other lens forming materials as well. A person skilled in the art would know how to select suitable lens forming materials, as well as how to adapt intensities and curing time periods for said lens forming materials. Without prejudice one feasible method to determine suitable intensities and curing time periods for a given lens forming material is described in the following:

For a given lens forming material, a person skilled in the art would first determine the mechanical properties feasible for an industrial scale manufacture of contact lenses, e.g. modulus of elasticity (G'). Then the person skilled in the art would, in a series of experiments, determine a suitable intensity for curing said lens forming material in a continuous cure method up to said modulus of elasticity (G'), whereby the person skilled in the art would determine a threshold for low and high intensities with reference to said lens forming material.

In a further series of experiments, as for example shown in Table 3 below, the person skilled in the art would then determine the (oxygen) inhibition period, starting with a high intensity determined according to the threshold above, for a short period of time, which then is increased step-by-step, whereby after said short periods the intensity is reduced back to a low intensity determined according to the threshold above for a long period until complete cure of the lens forming material.

Once the (oxygen) inhibition period is determined, the person skilled in the art may then start to set up and optimize an illumination scheme as follows: The high intensity determined according to the threshold above is applied for a first short time period corresponding to the inhibition period as determined above. Then the low intensity determined according to the threshold above is applied for varying long time periods and is increased step-by-step after varying time periods, whereby the modulus of elasticity (G') is determined for each illumination scheme. With the respective data for modulus of elasticity (G') over time (t), the person skilled in the art will select the illumination scheme that provides for a feasible modulus of elasticity (G') within the shortest possible processing time.

### EXAMPLES

For the photo-rheological experiments referred to below, the following formulation for the lens forming material was used:

### Formulation:

| | | |
|---|---|---|
| CE-PDMS | 33 wt.% | Component A |
| TRIS-MA | 17 wt.% | Component B |
| 1-PrOH | 24 wt.% | Solvent |
| DMA | 25 wt.% | Monomer |
| DC 1173 | 1 wt.% | Photoinitator |

### Components:

CE-PDMS is a chain-extended polydimethylsiloxane vinylic macromer with terminal methacrylate groups and is prepared as follows: In the first step, α,ω-bis(2-hydroxy-ethoxypropyl)-polydimethylsiloxane (Mn = 2000, Shin-Etsu, KF-6001a) is capped with isophorone diisocyanate by reacting 49.85 g of α,ω-bis(2-hydroxyethoxypropyl)-polydimethyl-siloxane with 11.1 g isophorone diisocyanate (IPDI) in 150 g of dry methyl ethyl ketone in the presence of 0.063g of dibutyltindilaurate (DBTDL). The reaction mixture is kept for 4.5 h at 40° C, forming IPDI-PDMS-IPDI. In the second step, a mixture of 164.8 g of α,ω-bis(2-hydroxyethoxypropyl)poly-dimethylsiloxane (Mn = 3000, Shin-Etsu, KF-6002) and 50 g of dry methyl ethyl ketone are added dropwise to the IPDI-PDMS-IPDI solution to which has been added an additional 0.063 g of DBTDL. The reactor is held for 4.5 h at 40° C, forming HO-PDMS-IPDI-PDMS-IPDI-PDMS-OH. MEK is then removed under reduced pressure. In the third step, the terminal hydroxyl-groups are capped with methacryloyloxyethyl groups by addition of 7.77 g of isocyanatoethyl methacrylate (IEM) and an additional 0.063 g of DBTDL, forming IEM-PDMS-IPDI-PDMS-IPDI-PDMS-IEM.
TRIS-MA is Trismethacrylate, which is N-[tris(trimethylsiloxy)-silylpropyl]methacrylate.
1-PrOH is 1-propanol.
DMA is N,N-dimethylacrylamide.
DC 1173 is 2-hydroxy-2-methyl-1-phenyl-propanone (Darocur® 1173).

The equipment used for the photo-rheological experiments was a commercially available rheological instrument (Haake RheoStress 600) in a plate / plate measurement configuration, with a measurement gap of about 100 µm and a diameter of the circular probe plate of 15 mm, with the determination of the shear modulus (G') in oscillation (shear rate 100 s⁻¹) under illumination of the probe space with UV/VIS radiation through the lower (fixed) plate consising of quartz. The radiation was generated with a Hamamatsu LC5 UV Lamp with a mercury-xenon burner. Intensities were measured through a 297 nm Tafelmaier cut-off filter using an ESE UV-B sensor, the probe space was illuminated through another Tafelmaier 330 nm cut-off filter.

### Results:

In the photo-rheology experiments, the development of the shear modulus of a photocuring formulation is followed over the irradiation time. The first 5 seconds are run without illumination to give the oscillating measurement platform time to stabilize its amplitude. After that run-in time, the UV light illumination into the probe is switched on with the given intensity/time sequences. Main results from such rheology measurements are the G' value reached when the curve levels out to a "plateau", as well as the illumination time (t) needed until then.

Figure 4 shows three typical curves (a, b, c) under continuous illumination with different intensities from about 0.125 mW/cm² (I_{c} in Figure 3) up to about 16 mW/cm² (Iₐ in Figure 3), wherein the respective illumination schemes are shown in Figure 3. The data of said set of experiments is given in more detail in Tables 1 and 2 below, where. "tᵢₙₕ(s)" and "t_{cross}(s)", respectively, refer to the duration of the oxygen inhibition period in seconds and the time to complete crosslinking in seconds.

As expected, the cure rate is higher with higher illumination intensities, but the plateau G' values diminish, since more initiating photo-radicals are produced with higher intensities, leading to the production of more short chain oligomers, which are mostly not linked into the overall crosslinked network. Thus, a lower number of the original monomers are contributing to the load-bearing network and would be extractables in a subsequent solvent extraction process.

Table 3 shows measurements to determine the oxygen inhibition period. From the example 3.2, which is at continuous illumination with a rather low intensity of 1 mW/cm², G' deviates from the baseline after about 30 seconds of illumination. In a series of experiments (examples 3.3 to 3.8) this inhibition period is shortened with high intensity light of 16 mW/cm² over the first few seconds (from 1 to 10 s), after which the intensity is reduced back to about 1 mW/cm². The inhibition period is shortened to about 20 s. The plateau G' values show some dependence of the irradiation time with high intensity: 6 seconds and more high intensity lowers G' significantly, which is taken as an indication, without prejudice to be bound by said theory, that the true oxygen inhibition time is only about 4 s, beyond which the polymerization reaction already starts without being seen in the G' curve.

Subsequent experiments were run wherein the irradiation was started with a short pulse of 4 seconds with high intensity of about 16 mW/cm², after which different longer time periods of lower intensities followed (see Tables 4 and 5).

Figure 5 shows an illumination scheme according to the prior art with a continuous illumination with a low intensity (I_{c}), as well as a preferred illumination scheme according to the present invention with three Intensities I₁, I₂ and I₃ (modulated intensity).
The relating photorheology curves depicted in Figure 6 demonstrate, that with said preferred illumination scheme according to the invention, a complete curing level of the crosslinked polymer can be reached in shorter time (t_{d}) with a similar G' value compared to continuous illumination with constant intensity (t_{c}). As an example, compared to a cure time (t_{c}) of about 210 seconds (plateau of G') with continuous illumination at 2 mw/cm² (see Example 5.0 in Table 5), the sequence of 4s @ 16mWcm², 60 seconds @ 2 mW/cm², 120 seconds @ 4 mWcm², reaches the plateau already after a cure time (t_{d}) of about 184 seconds (see Example 5.2 in Table 5).

In a further, more preferred aspect, Example 5.2 of Table 5 demonstrates, that a reasonable G' value of 85 kPa is reached after altogether about 180 seconds with modulated UV light intensity, compared to about 210 seconds with continuous illumination at 2 mW/cm² (see comparative example 1.5 in Table 1). Accordingly, for the lens forming material given above, the curing time to a G' level that is feasible for the commercial manufacture of contact lenses, can be shortened by about 15%, with a total energy input that is only about 33% higher compared to continuous illumination at constant low intensities.

**Table 1**

| Example | Intensity (mW/cm²) | tᵢₙₕ(s) | t_{cross}(s) | Modulus G' (kPa) |
|---|---|---|---|---|
| 1.1 | 0.14 | 118 | 560 | 95 |
| 1.2 | 0.26 | 88 | 480 | 98 |
| 1.3 | 0.53 | 62 | 340 | 104 |
| 1.4 | 1.02 | 34 | 250 | 100 |
| 1.5 | 2.01 | 26 | 210 | 87 |
| 1.6 | 3.93 | 20 | 180 | 80 |
| 1.7 | 7.92 | 17 | 160 | 61 |
| 1.8 | 15.7 | 16 | 160 | 41 |

Example 1.5 provides for a Modulus G' of 87 kPa after continuous illumination for 210 seconds at 2 mW/cm². Said level of Modulus G' is generally considered feasible for the commercial manufacture of a contact lens, in particular for a silicone hydrogel contact lens.

**Table 2**

| Example | Intensity (mW/cm²) | tᵢₙₕ(s) | t_{cross}(s) | Modulus G' (kPa) |
|---|---|---|---|---|
| 2.1 | 0.12 | 77 | 465 | 145 |
| 2.2 | 0.26 | 52 | 360 | 138 |
| 2.3 | 0.54 | 40 | 304 | 133 |
| 2.4 | 1.01 | 27 | 275 | 130 |
| 2.5 | 2.05 | 20 | 220 | 118 |

As the Examples 2.1 to 2.5 show, with continuous illumination a very high Modulus G' is only accessible for very long illumination times with relatively low intensities.

### For all Examples 3.2 to 3.8 total illumination time is 240s. Examples 3.1 and 3.2 are Comparative Examples.

**Table 3**

| Example | Intensity I₁ (mW/cm²) | t₁(s) | Intensity I₂ (mW/cm²) | t₂(S) | Modulus G'(kPa) |
|---|---|---|---|---|---|
| 3.1 | 15.7 | 140 | - | - | 43 |
| 3.2 | 1.00 | 240 | - | - | 100 |
| 3.3 | 15.8 | 1 | 0.98 | 239 | 99 |
| 3.4 | 15.8 | 2 | 0.98 | 238 | 98 |
| 3.5 | 15.8 | 4 | 0.98 | 236 | 97 |
| 3.6 | 15.8 | 6 | 0.98 | 234 | 94 |
| 3.7 | 15.8 | 8 | 0.98 | 232 | 91 |
| 3.8 | 15.8 | 10 | 0.98 | 230 | 89 |

For all Examples 4.1 to 4.4 illumination time t₁ = 4s @ Intensity I₁ of 15.7 mW/cm². Example 4.0 is a Comparative Example with no t₁ @ I₁.

**Table 4**

| Example | t₂(s) @ I₂ (mW/cm²) | t₃(s) @ I₃ (mW/cm²) | t₄(s) @ I₄ (mW/cm²) | t₅(s) @ I₅ (mW/cm²) | t₆(s) @ I₆ (mW/cm²) | tᵢₙₕ(s) | t_{cross}(s) | Modulus G' (kPa) |
|---|---|---|---|---|---|---|---|---|
| 4.0 | 240 @ 1.1 | - | - | - | - | 34 | 259 | 102 |
| 4.1 | 120 @ 1 | 120 @ 2 | - | - | - | 19 | 187 | 87 |
| 4.2 | 60 @ 1 | 120 @ 2 | 60 @ 4 | - | - | 20 | 195 | 86 |
| 4.3 | 60 @ 1 | 60 @ 2 | 60 @ 4 | 60 @ 8 | | 20 | 192 | 88 |
| 4.4 | 30 @ 1 | 60 @ 2 | 60 @ 4 | 60 @ 8 | 30 @ 15.7 | 20 | 179 | 86 |

For all Examples 5.1 to 5.6 illumination time t₁ = 4s @Intensity I₁ of 15.7 mW/cm². Example 5.0 is a Comparative Example according to Example 1.5 of Table 1, i.e. with no t₁ @ I₁.

**Table 5**

| Example | t₂(s) @ I₂ (mW/cm²) | t₃(s) @ I₃ (mW/cm²) | t₄(s) @ I₄ (mW/cm²) | t₅(s) @ I₅ (mW/cm²) | t₁ₙₕ(s) | t_{cross}(s) | Modulus G' (kPa) |
|---|---|---|---|---|---|---|---|
| 5.0 | 240 @ 2 | - | - | - | 26 | 210 | 87 |
| 5.1 | 120 @ 2 | 120 @ 4 | - | - | 19 | 187 | 79 |
| 5.2 | 60 @ 2 | 120 @ 4 | 60 @ 8 | - | 18 | 184 | 85 |
| 5.3 | 60 @ 2 | 60 @ 4 | 60 @ 8 | 60 @ 15.7 | 18 | 158 | 78 |
| 5.4 | 60 @ 2 | 60 @ 4 | 60 @ 8 | 60 @ 15.7 | 18 | 168 | 78 |
| 5.5 | 30 @ 2 | 60 @ 4 | 60 @ 8 | 90 @ 15.7 | 19 | 164 | 81 |
| 5.6 | 30 @ 2 | 60 @ 4 | 60 @ 8 | 90 @ 15.7 | 18 | 162 | 80 |

## Claims

1. A process for curing a lens forming material, comprising the steps of providing a lens forming material to form a lens in a mold; irradiating the lens forming material with UV/VIS radiation, **characterized in that** the UV/VIS radiation is modulated UV/VIS radiation provided according to the following scheme:
(1) a first intensity for a first time period; and thereafter
(2) a second intensity for a second time period;
wherein the first intensity is significantly higher than the second intensity;
wherein the first time period is significantly shorter than the second time period; and wherein, within a total curing time of the first and second time period, the lens-forming material is cured to a complete curing level.

2. Process according to claim 1, **characterized in that** the scheme further comprises, after the second intensity for the second time period,
(3) a third intensity for a third time period;
wherein, within a total curing time of the first, second and third time period, the lens-forming material is cured to a complete curing level, wherein the third intensity is higher than the second intensity.

3. Process according to claim 2, **characterized in that** the scheme further comprises, after the third intensity for the third time period,
(4) a fourth intensity for a fourth time period; wherein, within a total curing time of the first, second, third and fourth time period, the lens-forming material is cured to a complete curing level, wherein each of the third and fourth intensity is higher than each one of the preceding intensities.

4. Process according to claim 2, wherein the third intensity is from 1 to 2 times higher, than the second intensity, and wherein the third time period is 0.5 to 2 times of the second time period.

5. Process according to any one of the preceding claims, **characterized in that** the first intensity is from 0.4 to 64 mW/cm².

6. Process according to any one of the preceding claims, **characterized in that** the second intensity is from 0.1 to 4 mW/cm².

7. Process according to any one of the preceding claims, **characterized in that** the third intensity is from 0.1 to 8 mW/cm².

8. Process according to any one of the preceding claims, **characterized in that** the first time period is from 1 to 12 s.

9. Process according to any one of the preceding claims, **characterized in that** the second time period is from 30 to 60 s.

10. Process according to any one of the preceding claims, **characterized in that** the third time period is from 15 to 240 s.

11. Process according to claim 1, wherein after the first intensity for the first time period the intensity is continuously increased over a second time period, starting from a second intensity; wherein the first intensity is significantly higher than the second intensity; wherein the first time period is significantly shorter than the second time period; and wherein, within a total curing time of the first and second timer period, the lens-forming material is cured to a complete curing level.

12. Process according to claim 11, wherein after the first intensity for the first time period the intensity is continuously increased over the second time period, starting from the second intensity at the beginning of the second time period and increasing up to the first intensity at the end of the second time period.

13. Process according to claim 11 or claim 12, wherein the intensity is continuously increased according to a linear function.

14. A contact lens manufactured by a process according to any one of the preceding claims.

15. Use of a process according to any one of claims 1 to 13 in the manufacture of contact lenses.
